(19) Europäisches Patentamt
European Patent Office
Office européen des brevets

(11) **EP 4 738 948 A1**

(12) **EUROPEAN PATENT APPLICATION**
published in accordance with Art. 153(4) EPC

(43) Date of publication:
**06.05.2026 Bulletin 2026/19**

(21) Application number: **23942824.6**

(22) Date of filing: **28.06.2023**

(51) International Patent Classification (IPC):
**H04W 52/36** (2009.01)    **H04W 74/08** (2024.01)

(52) Cooperative Patent Classification (CPC):
**H04W 24/02; H04W 36/00; H04W 52/36;
H04W 74/08**

(86) International application number:
**PCT/CN2023/103519**

(87) International publication number:
**WO 2025/000307 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **LUO, Xingyi
Beijing 100085 (CN)**

(74) Representative: **Stöckeler, Ferdinand
Schoppe, Zimmermann, Stöckeler
Zinkler, Schenk & Partner mbB
Patentanwälte
Radlkoferstrasse 2
81373 München (DE)**

(54) **TRANSMISSION POWER ADJUSTMENT METHOD, DEVICE, TERMINAL, SYSTEM, AND
STORAGE MEDIUM**

(57)    The present disclosure relates to a transmission power adjustment method, a device, a terminal, a system, and a storage medium. The method comprises: receiving first information sent by a network device, wherein the first information is used for triggering a user equipment to initiate a random access transmission to a candidate cell to perform timing advance (TA) measurement, and the first information comprises at least one of a random access resource of the candidate cell and first beam information for initiation of random access; receiving configuration information sent by the network device, wherein the configuration information comprises a power ramping step for performing a random access retransmission; and on the basis of the first information and the power ramping step, determining first transmission power for the random access transmission. Thus, the transmission efficiency of a user sending a preamble sequence is improved, and then the success rate of RACH reception is increased.

FIG. 2a

**Description**

<u>TECHNICAL FIELD</u>

The disclosure relates the field of communication technologies, in particular to a method for adjusting a transmit power, a device, a terminal, a system and a storage medium.

<u>BACKGROUND</u>

During wireless communication, due to mobility, a network determines to trigger a user/terminal handover to an appropriate cell based on mobility measurement results. To reduce handover latency, multiple candidate cells are maintained for the user. When the network determines to a handover is necessary based on beam measurement results from each candidate cell and the current serving cell, it triggers the user to handover to the target cell selected from the candidate cells.

<u>SUMMARY</u>

The embodiments of the disclosure provide a method for adjusting a transmit power, a device, a terminal, a system and a storage medium.

According to a first aspect, the embodiments of the disclosure provide a method for adjusting a transmit power. The method is performed by a user equipment (UE), and includes:

receiving first information sent by a network device, in which the first information is used to trigger the UE to initiate a random access transmission to a candidate cell for a measurement of timing advance (TA), the first information includes at least one of a random access resource of the candidate cell or first beam information for initiating random access, and the first information is sent to the UE by a serving cell of the UE;
receiving configuration information sent by the network device, in which the configuration information includes a power ramping step for performing a random access retransmission; and
determining a first transmit power for the random access transmission based on the first information and the power ramping step.

According to a second aspect, the embodiments of the disclosure provide a method for adjusting a transmit power. The method is performed by a network device, and includes:

sending first information, in which the first information is used to trigger a UE to initiate a random access transmission to a candidate cell for a measurement of a TA, the first information includes at least one of a random access resource of the candidate cell or first beam information for initiating random access, and the first information is sent to the UE by a serving cell of the UE; and
sending configuration information, in which the configuration information includes a power ramping step for performing a random access retransmission, in which the UE determines a first transmit power for the random access transmission based on the first information and the power ramping step.

According to a third aspect, the embodiments of the disclosure provide a method for adjusting a transmit power. The method includes:

sending by a network device first information to a UE, in which the first information is used to trigger the UE to initiate a random access transmission to a candidate cell for a measurement of a TA, and the first information includes at least one of a random access resource of the candidate cell or first beam information for initiating random access;
sending by the network device configuration information to the UE, in which the configuration information includes a power ramping step for performing a random access retransmission; and
determining by the UE a first transmit power for the random access transmission based on the first information and the power ramping step.

According to a fourth aspect, the embodiments of the disclosure provide a UE. The UE includes:

a first transceiver module, configured to receive first information sent by a network device, in which the first information is used to trigger the UE to initiate a random access transmission to a candidate cell for a measurement of a TA, the first information includes at least one of a random access resource of the candidate cell or first beam information for initiating random access, and the first information is sent to the UE by a serving cell of the UE;
a second transceiver module, configured to receive configuration information sent by the network device, in which the configuration information includes a power ramping step for performing a random access retransmission; and
a determining module, configured to determine a first transmit power for the random access transmission based on the first information and the power ramping step.

According to a fifth aspect, the embodiments of the disclosure provide a network device. The network device includes:

a first transceiver module, configured to send first information, in which the first information is used to trigger a UE to initiate a random access transmission to a candidate cell for a measurement of a TA, the first information includes at least one of a random access resource of the candidate cell or first beam information for initiating random access, and the first information is sent to the UE by a serving cell of the UE; and
a second transceiver module, configured to send configuration information, in which the configuration information includes a power ramping step for performing a random access retransmission, and the power ramping step and the first information are configured for the UE to determine a first transmit power for the random access transmission.

According to a sixth aspect, the embodiments of the disclosure provide a UE. The UE includes:

one or more processors;
in which the terminal is configured to implement the method for adjusting the transmit power of the first aspect of the disclosure.

According to a seventh aspect, the embodiments of the disclosure provide a network device. The network device includes:

one or more processors;
in which the network device is configured to implement the method for adjusting the transmit power of the second aspect of the disclosure.

According to an eighth aspect, the embodiments of the disclosure provide a communication system. The communication system includes a terminal and a network device. The terminal is configured to implement the method for adjusting the transmit power of the first aspect of the disclosure, and the network device is configured to implement the method for adjusting the transmit power of the second aspect of the disclosure.

According to a ninth aspect, the embodiments of the disclosure provide a storage medium. The storage medium stores instructions, and when the instructions are run by a communication device, the communication device is caused to implement the method for adjusting the transmit power of the first aspect of the disclosure or the method for adjusting the transmit power of the second aspect of the disclosure.

The embodiments of the disclosure improve a transmission efficiency of a preamble sequence at the user side, and further improve a success rate of random access channel (RACH) reception.

## BRIEF DESCRIPTION OF THE DRAWINGS

In order to clearly illustrate the technical solutions of the embodiments of the disclosure, brief descriptions of drawings used in the embodiments are given below. The drawings in the following descriptions are only some embodiments of the disclosure and do not specifically limit the protection scope of the disclosure.

FIG. 1a is a schematic structural diagram of a system for adjusting a transmit power according to an embodiment of the disclosure.
FIG. 1b is a schematic diagram of a cell handover method according to an embodiment of the disclosure.
FIG. 2a is an interactive schematic diagram of a method for adjusting a transmit power according to an embodiment of the disclosure.
FIG. 2b is a schematic diagram of a method for adjusting a transmit power according to an embodiment of the disclosure.
FIG. 3 is a flowchart of a method for adjusting a transmit power according to an embodiment of the disclosure.
FIG. 4 is a flowchart of a method for adjusting a transmit power according to an embodiment of the disclosure.
FIG. 5 is a flowchart of a method for adjusting a transmit power according to an embodiment of the disclosure.
FIG. 6 is a schematic structural diagram of a UE according to an embodiment of the disclosure.

FIG. 7 is a schematic structural diagram of a network device according to an embodiment of the disclosure.

FIG. 8 is a schematic structural diagram of a communication device 8100 according to an embodiment of the disclosure.

## DETAILED DESCRIPTION

The embodiments of the disclosure provide a method for adjusting a transmit power, a device, a terminal, a system and a storage medium.

According to a first aspect, the embodiments of the disclosure provide a method for adjusting a transmit power. The method includes:

receiving first information sent by a network device, in which the first information is used to trigger the UE to initiate a random access transmission to a candidate cell for a measurement of a TA, the first information includes at least one of a random access resource of the candidate cell or first beam information for initiating random access, and the first information is sent to the UE by a serving cell of the UE;

receiving configuration information sent by the network device, in which the configuration information includes a power ramping step for performing a random access retransmission; and

determining a first transmit power for the random access transmission based on the first information and the power ramping step.

In the above embodiments, the first information triggers the UE to initiate the random access transmission to the candidate cell and measure the TA value of the candidate cell. These increases the first transmission power of the user sending the preamble sequence, thereby enhancing the success rate of RACH reception.

In combination with some embodiments of the first aspect, in some embodiments, the method further includes: determining whether the random access transmission is an initial transmission or the random access retransmission based on the first information.

In combination with some embodiments of the first aspect, in some embodiments, the first information includes a first field, and the first field indicates that the random access transmission is the initial transmission or indicates that the random access transmission is the random access retransmission.

In combination with some embodiments of the first aspect, in some embodiments, the first information includes a second field, and the second field indicates that the random access transmission is the initial transmission or indicates a quantity of random access retransmissions.

In combination with some embodiments of the first aspect, in some embodiments, the method further includes: in response to the second field matching an initial transmission identifier, determining that the random access transmission is the initial transmission; and

in response to the second field not matching the initial transmission identifier, determining a difference between second encoding information and the initial transmission identifier as the quantity of retransmissions.

In combination with some embodiments of the first aspect, in some embodiments, determining whether the random access transmission is the initial transmission or the random access retransmission according to the first information includes:

determining an interval between the first information and second information, in which the second information is used to trigger the UE to initiate the random access transmission to the candidate cell for a last measurement of the TA; and

in response to the interval being less than a preset interval threshold, determining that the random access transmission is the random access retransmission.

In combination with some embodiments of the first aspect, in some embodiments, determining the first transmit power for the random access transmission based on the first information and the power ramping step includes:

determining that the random access transmission is the random access retransmission based on the first information; and

determining the first transmit power based on the power ramping step.

In combination with some embodiments of the first aspect, in some embodiments, determining the first transmit power based on the power ramping step includes:

in response to the random access transmission being the random access retransmission, determining a quantity of random access retransmissions; and

determining the first transmit power based on the quantity of random access retransmissions and the power ramping step.

In combination with some embodiments of the first aspect, in some embodiments, the first information includes a third field for indicating the quantity of random access retransmissions, and determining the quantity of random access retransmissions includes:

determining the quantity of random access retransmissions based on the third field.

In combination with some embodiments of the first aspect, in some embodiments, determining the quantity of random access retransmissions includes:

determining the quantity of random access retransmissions based on a retransmission counter.

In combination with some embodiments of the first aspect, in some embodiments, the method includes:

determining that the UE performs the random access transmission once; and
accumulating a quantity of random access transmissions based on the retransmission counter.

In combination with some embodiments of the first aspect, in some embodiments, determining the first transmit power based on the quantity of random access retransmissions and the power ramping step includes:

obtaining the quantity of random access retransmissions;
determining a second transmit power for the random access transmission based on the quantity of random access retransmissions and an initial transmit power of the random access transmission; and
determining a minimum value between a maximum transmit power of the UE and the second transmit power as the first transmit power.

In combination with some embodiments of the first aspect, in some embodiments, determining the first transmit power for the random access transmission based on the first information and the power ramping step includes:

determining, based on the first information, that the random access transmission is an initial transmission, and resetting a power ramping value of the UE; and
determining the first transmit power based on the power ramping step and the power ramping value reset.

In combination with some embodiments of the first aspect, in some embodiments, the method further includes: resetting a value of a retransmission counter to an initial value.

In combination with some embodiments of the first aspect, in some embodiments, the first information includes a third field, and determining the first transmit power for the random access transmission based on the first information and the power ramping step includes:

in response to the third field matching an initial transmission identifier, determining to reset a power ramping value; and determining the first transmit power based on the power ramping step and the power ramping value reset; or
in response to the third field not matching an initial transmission identifier, determining a target power ramping value based on the third field and the power ramping step; and
determining the first transmit power based on the target power ramping value and a power ramping value.

In combination with some embodiments of the first aspect, in some embodiments, the first information includes a fourth field for updating a transmit beam of the random access transmission, and determining the first transmit power for the random access transmission based on the first information and the power ramping step includes:

in response to the fourth field updating the transmit beam of the random access transmission, resetting a power ramping value; and
determining the first transmit power based on the fourth field, the power ramping value reset and the power ramping step.

In combination with some embodiments of the first aspect, in some embodiments, the method further includes: resetting a value of a retransmission counter to an initial value.

In combination with some embodiments of the first aspect, in some embodiments, the first information includes a fifth field for indicating that the random access transmission is an initial transmission, and resetting the power ramping value includes:

in response to the fifth field matching an initial transmission identifier, resetting the power ramping value based on the fifth field.

In combination with some embodiments of the first aspect, in some embodiments, the first information includes a sixth field for indicating a quantity of random access retransmissions, determining the first transmit power based on the fourth field, the power ramping value reset and the power ramping step includes:

determining a quantity of historical random access retransmissions of the UE before a beam switching; and
determining the first transmit power based on the sixth field, the quantity of historical random access retransmissions and the power ramping step.

In the above embodiments, the first information is used to ramp the power of the random access procedure for measuring the TA of the candidate cell. These increases the first transmit power of the user sending the preamble sequence, thereby enhancing the success rate of RACH reception to obtain the TA of the candidate cell.

According to a second aspect, the embodiments of the disclosure provide a method for adjusting a transmit power. The method is performed by a network device, and includes:

sending first information, in which the first information is used to trigger a UE to initiate a random access transmission to a candidate cell for a measurement of a TA, the first information includes at least one of a random access resource of the candidate cell or first beam information for initiating random access, and the first information is sent to the UE by a serving cell of the UE; and
sending configuration information, in which the configuration information includes a power ramping step for performing a random access retransmission, in which the UE determines a first transmit power for the random access transmission based on the first information and the power ramping step.

In the above embodiments, the network device instructs the UE to initiate the random access transmission to the candidate cell through the first information, and the UE determines a power ramping mode in the random access procedure based on the first information, which increases the first transmit power of the user sending the preamble sequence and further enhances the success rate of RACH reception.

In combination with some embodiments of the second aspect, in some embodiments, the first information includes a first field, and the first field indicates that the random access transmission is an initial transmission or indicates that the random access transmission is the random access retransmission.

In combination with some embodiments of the second aspect, in some embodiments, the first information includes a second field, and the second field indicates that the random access transmission is an initial transmission or indicates a quantity of random access retransmissions through second encoding information.

In combination with some embodiments of the second aspect, in some embodiments, the method further includes: in response to the second field matching an initial transmission identifier, determining that the random access transmission is the initial transmission; and
in response to the second field not matching the initial transmission identifier, determining the quantity of random access retransmissions based on the second field.

In combination with some embodiments of the second aspect, in some embodiments, the first information includes a fourth field for indicating the UE to update a transmit beam of the random access transmission, and the first transmit power is determined based on the fourth field.

In the above embodiments, the network device instructs the UE to initiate the random access transmission through the first information, and it also indicates a power ramping mode in the access processing in the first information, which increases a first transmit power of the user and further enhances the success rate of RACH reception.

According to a third aspect, the embodiments of the disclosure provide a method for adjusting a transmit power. The method includes:

sending by a network device first information to a UE, in which the first information is used to trigger the UE to initiate a random access transmission to a candidate cell for a measurement of a TA, and the first information includes at least one of a random access resource of the candidate cell or first beam information for initiating random access;
sending by the network device configuration information to the UE, in which the configuration information includes a power ramping step for performing a random access retransmission; and
determining by the UE a first transmit power for the random access transmission based on the first information and the power ramping step.

In the above embodiments, the network device sends the first information to the UE, and the UE is triggered to initiate the random access transmission to perform the measurement of the TA based on the first information and determine the first transmit power of the random access transmission based on the first information, which increases the success rate of RACH reception to obtain the TA of the candidate cell.

According to a fourth aspect, the embodiments of the disclosure provide a UE. The UE includes:

a first transceiver module, configured to receive first information sent by a network device, in which the first information is used to trigger the UE to initiate a random access transmission to a candidate cell for a measurement of a TA, the first information includes at least one of a random access resource of the candidate cell or first beam information for initiating random access, and the first information is sent to the UE by a serving cell of the UE;

a second transceiver module, configured to receive configuration information sent by the network device, in which the configuration information includes a power ramping step for performing a random access retransmission; and

a determining module, configured to determine a first transmit power for the random access transmission based on the first information and the power ramping step.

In the above embodiment, the first information is used to ramp the power of the random access procedure for measuring the TA of the candidate cell. These increases the first transmit power of the user sending the preamble sequence, thereby enhancing the success rate of RACH reception to obtain the TA of the candidate cell.

According to a fifth aspect, the embodiments of the disclosure provide a network device. The network device includes:

a first transceiver module, configured to send first information, in which the first information is used to trigger a UE to initiate a random access transmission to a candidate cell for a measurement of a TA, the first information includes at least one of a random access resource of the candidate cell or first beam information for initiating random access, and the first information is sent to the UE by a serving cell of the UE; and

a second transceiver module, configured to send configuration information, in which the configuration information includes a power ramping step for performing a random access retransmission, and the power ramping step indicates the UE to determine a first transmit power for the random access transmission based on the first information and the power ramping step.

In the above embodiment, the network device sends the first information to the UE, and the UE is triggered to initiate the random access transmission to perform the measurement of the TA based on the first information and determines the first transmit power of the random access transmission, which improves the success rate of RACH reception to obtain a TA of the candidate cell.

According to a sixth aspect, the embodiments of the disclosure provide a terminal. The terminal includes:

one or more processors;

in which the terminal is configured to implement the method for adjusting the transmit power of the first aspect of the disclosure.

According to a seventh aspect, the embodiments of the disclosure provide a network device. The network device includes:

one or more processors;

in which the network device is configured to implement the method for adjusting the transmit power of the second aspect of the disclosure.

According to an eighth aspect, the embodiments of the disclosure provide a communication system. The communication system includes a terminal and a network device. The terminal is configured to implement the method for adjusting the transmit power of the first aspect of the disclosure, and the network device is configured to implement the method for adjusting the transmit power of the second aspect of the disclosure.

According to a ninth aspect, the embodiments of the disclosure provide a storage medium. The storage medium stores instructions, and when the instructions are run by a communication device, the communication device is caused to implement the method for adjusting the transmit power of the first aspect of the disclosure or the method for adjusting the transmit power of the second aspect of the disclosure.

It is understood that the terminal, the network device, the communication system and the storage medium are all used for implementing the methods provided by the embodiments of the disclosure. Therefore, for the beneficial effects it can achieve reference can be made to the beneficial effects in the corresponding methods, which will not be repeated here.

The embodiments of the disclosure provide a method for adjusting a transmit power, a device, a terminal, a system and a storage medium. In some embodiments, "method for adjusting the transmit power", "information processing method" and "communication method" are interchangeable. Moreover, "UE", "network device", "information processing device" and "communication device" are interchangeable. Furthermore, "information processing system" and "communication system" are also interchangeable.

The embodiments of the disclosure are not exhaustive, but only schematic illustrations of some embodiments, and are not taken as specific limitations on the protection scope of the disclosure. Without contradiction, each step in the embodiments may be implemented as an independent embodiment, and steps may be combined arbitrarily. For example, the solution after removing some steps in the embodiments may also be implemented as an independent embodiment, and the steps in the embodiments may be performed in other orders. In addition, optional implementations in the embodiments may be combined arbitrarily, and the embodiments may also be combined arbitrarily. For example, some or all steps of different embodiments may be combined arbitrarily, and each embodiment may be arbitrarily combined with the optional implementations of other embodiments.

In the embodiments of the disclosure, unless there are special explanations and logical conflicts, terms and/or descriptions of the embodiments are consistent and can refer to each other, and technical features in different embodiments may be combined as a new embodiment according to their inherent logical relations.

The terms used in the embodiments of the disclosure are only for the purpose of describing specific embodiments, and are not used as limitations of the disclosure.

In the embodiments of the disclosure, unless otherwise specified, an element expressed in a singular form through terms such as "a", "an" "the" "the above", "the above described", "this" and so on, is interpreted as that there is "one and only one", "one or more" or "at least one" of the element. For example, when an article, e.g., "a", "an" or "the" in English, is used in translation, the noun after the article can be interpreted as in a singular form or in a plural form.

In the embodiments of the disclosure, "a plurality of" refers to "two or more".

In some embodiments, the terms "at least one of", "one or more", "a plurality of" and "multiple" are interchangeable.

In some embodiments, "at least one of A or B", "A and/or B", "in one case A, while in another case B", and "in response to one case A, while in response to another case B" may be used in the following technical schemes depends on the specific situation: in some embodiments, A is executed independent of B; in some embodiments, B is executed independent of A; in some embodiments, A or B is selectively executed; and in some embodiments, A and B are both executed. The same applies when there are more branches such as A, B and C.

In some embodiments, "A or B" may be used in the following technical schemes depends on the condition: in some embodiments, A is executed independent of B; in some embodiments, B is executed independent of A; and in some embodiments, A or B is selectively executed. The same applies when there are more branches such as A, B and C.

The prefixes such as "first" and "second" in the embodiments of the disclosure are only used to describe different objects, and the prefix is not intended to limit the position, order, priority, quantity or content of a certain object. The descriptions of the objects can refer to the descriptions of the claims or the embodiments, and should not constitute unnecessary limitations because of the use of prefixes. For example, to describe a "field", the prefixes "first" and "second" in "first field" and "second field" do not indicate the position or order of the fields, and do not indicate whether the "first field" and "second field" are in the same message or not, nor do they limit the sequence of the "first field" and "second field". For another example, to describe a "level", the prefixes "first" and "second" in "first level" and "second level" do not limit the priorities of the levels. Moreover, an ordinal number used to describe an object does not indicate a quantity of the object, and there may be one or more objects. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, the terms "in response to", "in response to determining", "in the case", "when", "while", "if" are interchangeable.

In some embodiments, the terms "greater than", "greater than or equal to", "more than" "more than or equal to", "higher than", "higher than or equal to", "no less than", "no lower than" and "above" are interchangeable. Moreover, the terms "less than", "less than or equal to", "lower than", "lower than or equal to", "smaller than", "smaller than or equal to", "no greater than", "no higher than" and "below" are interchangeable.

In some embodiments, the apparatus/device may be interpreted as physical or virtual, and its name is not limited to those listed in the embodiments. In some cases, it may be understood as "equipment", "device", "circuit", "network element", "node", "function", "unit", "section", "system", "network", "chip", "chip system", "entity" or "body".

In some embodiments, "network" may be interpreted as a device included in the network, such as an access network device and a core network device.

In some embodiments, "access network (AN) device" may also be referred to as "radio AN (RAN) device", "base station (BS)", "radio base station" or "fixed station". In some embodiments, it may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" or "bandwidth part (BWP)".

In some embodiments, "terminal" or "terminal device" may be referred to as UE, user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client or client.

In some embodiments, data and information are obtained by means comply with the laws and regulations of the host country.

In some embodiments, data and information are obtained with the consent of users.

In addition, each element, row or column in the tables of the embodiments of the disclosure can be implemented as an independent embodiment, and any combination of element, row and column can be implemented as an independent embodiment.

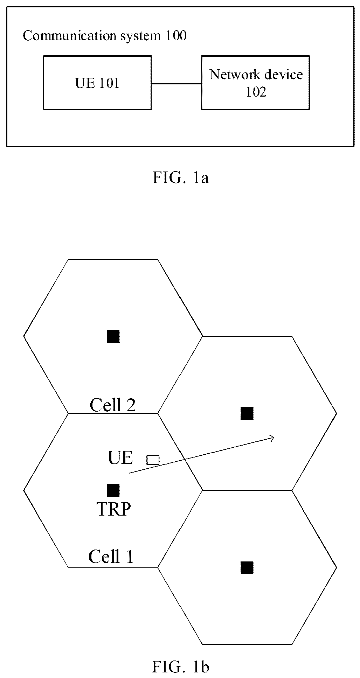

FIG. 1a is a schematic structural diagram of a system 100 for adjusting a transmit power according to an embodiment of the disclosure. As illustrated in FIG. 1a, the system 100 includes a UE 101 and a network device 102.

In some embodiments, the UE 101 includes at least one of a mobile phone, a wearable device, an Internet of Things (IoT) device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited thereto.

In some embodiments, the network device 102 may be a node or a device that connects the UE to a wireless network, and it includes at least one of an evolved Node B (eNB) in a 5G communication system, a next generation eNB (ng-eNB), a next generation NodeB (gNB), a NodeB (NB), a home NB (HNB), a home evolved NB (HeNB), a wireless backhaul equipment, a radio network controller (RNC), a base station controller (BSC), a base transceiver station (BTS), a base band unit (BBU), a mobile switching center, a base station in a 6G communication system, an Open RAN, a Cloud RAN, a base station in other communication systems, or an access node in a wireless fidelity (Wi-Fi) system, which is not limited thereto.

In some embodiments, the technical solution of the disclosure is applied to the Open RAN. In this case, the interfaces between AN devices or within the AN devices involved in the embodiments of the disclosure may be used as internal interfaces of the Open RAN, and the procedures and information interactions between these internal interfaces are implemented by software or programs.

In some embodiments, the AN device is composed of a central unit (CU) and distributed units (DUs), and CU may also be the abbreviation of control unit. The use of the CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited thereto.

It is understandable that to clearly illustrate the technical solution of the embodiments of the disclosure, its applicable communication system is described firstly in the embodiments of the disclosure, which does not constitute as a limitation on the technical solution provided by the embodiments of the disclosure. Those skilled in the art understand that as system architectures evolve and new business scenarios emerge, the technical solution provided by the embodiments of the disclosure is also applicable to similar technical problems.

The following embodiments of the disclosure are applied to the entire or a portion of the system 100 shown in FIG. 1, which is not limited herein. The entities in the system shown in FIG. 1 are examples. The system may include all or part of the entities in FIG. 1, and may also include entities not shown in FIG. 1. The number and form of entities are arbitrary, and the entities may be physical or virtual. The connection relationship between entities is illustrated as an example. For example, the entities may or may not be connected, and the entities may be connected by any means, e.g., directly or indirectly, or in a wired manner or wirelessly.

The embodiments of the disclosure may be applied to a long-term evolution (LTE) system, an LTE-Advanced (LTE-A) system, an LTE-Beyond (LTE-B) system, a SUPER 3G system, an IMT-Advanced system, a 4th generation mobile communication system (4G), a 5th generation mobile communication system (5G), a 5G new radio (NR) system, a future radio access (FRA) system, a new-radio access technology (RAT) system, a NR system, a new radio access (NX) system, a future generation radio access (FX) system, a global system for mobile communications (GSM), a CDMA2000, an ultra mobile broadband (UMB), an IEEE 802.11(Wi-Fi), an IEEE 802.16 (WiMAX), an IEEE 802.20, an ultra-wideband (UWB), a Bluetooth, a public land mobile network (PLMN), a device-to-device (D2D) system, a machine-to-machine (M2M) system, an IoT system, a vehicle-to-everything (V2X) system, systems using other communication methods or their next generation systems. In addition, multiple systems may be combined for applications, such as a combination of the LTE/LTE-A system and 5G.

L1/L2-based inter-cell mobility (LTM) is defined in relevant communication standards. FIG. 1b is a schematic diagram of a cell handover method according to an embodiment of the disclosure. As illustrated in FIG. 1b, a base station may maintain multiple candidate cells for a user. As the user moves, when handover is required, a cell is selected from these candidate cells as a target cell based on a handover rule, and the UE is controlled to switch to the target cell. Unlike existing cell handover methods, in order to reduce handover latency and complete the handover as quickly as possible, the handover rule is to judge based on a measurement result of UEL1 (physical layer), and a handover signaling is a dynamic signaling. Furthermore, it needs to measure a TA from the user to each cell in advance to avoid interference between multiple transmitted signals on the network side.

In the LTM, there are many measurement schemes for the TA for each candidate cell. These schemes include a measurement scheme supporting physical downlink control channel (PDCCH) Order RACH. To reduce a time overhead of performing measurements of the TA for candidate cells, random access response (RAR) transmission may be omitted when determining an RACH in the LTM. If the network side does not correctly receive a preamble sent by the UE for measuring a TA, the network side needs to trigger an RACH to perform the TA measurement again through PDCCH order. Since it fails to receive the preamble at the first time, in order to make this transmission as successful as possible, it may consider to increase a transmit power of RACH to the candidate cell to improve the success rate of RACH reception.

In the embodiment of the disclosure, the power ramping of RACH is calculated by the following equation:

$$P_{PRACH,b,f,c}(i) = min\{P_{CMAX,f,c}(i), P_{PRACH,target,f,c} + PL_{b,f,c}\}$$

where $P_{PRACH,b,f,c}(i)$ represents a transmit power of the preamble, $P_{CMAX,f,c}(i)$ represents a maximum transmit power of the UE, and $P_{PRACH,target,f,c}$ represents a target receiving power of Physical RACH (PRACH), and $PL_{b,f,c}$ represents a path loss of a downlink reference signal. During random access, if the UE does not receive the RAR correctly, it will determine that the transmission of the preamble has failed, and proceed to retransmit the preamble while performing power ramping (increase the transmit power base on the transmit power ramping step). In detail, each retransmission will incrementally raise the transmit power of the preamble.

In the embodiments of the disclosure, in the LTM, there may be no RAR process in the PDCCH order RACH used for the TA measurement of the candidate cell, and the UE cannot make a decision on whether to retransmit the RACH and perform power ramping according to whether the RAR has been successfully received.

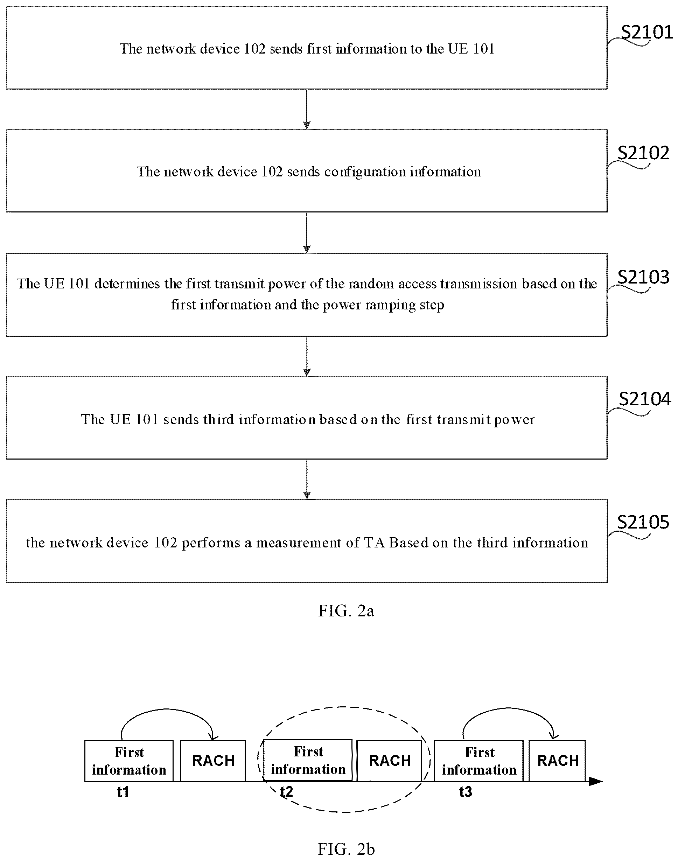

FIG. 2a is an interactive schematic diagram of a method for adjusting a transmit power according to an embodiment of the disclosure. As illustrated in FIG. 2a, an embodiment of the disclosure involves a method for adjusting a transmit power, and the method includes the following steps.

At step S2101, the network device 102 sends first information to the UE 101.

In some embodiments, the terms "send", "transmit", "report", "issue", "two-way transmit" and "send and/or receive" are interchangeable.

In some embodiments, the UE 101 receives the first information. Optionally, the first information is sent to the UE 101 by a serving cell corresponding to the UE 101.

In some embodiments, "obtain", "acquire", "collect", "receive", "transmit", "two-way transmit" and "send and/or receive" are interchangeable, which may be interpreted as receiving from other subjects, obtaining from protocols, obtaining from higher layers, processing by itself, or implementing automatically.

In some embodiments, the names of information and the like are not limited to those listed in the embodiments. The terms "information", "message", "signal", "signaling", "report", "configuration", "indication", "instruction", "command", "channel", "parameter", "domain", "field", "symbol", "symbol", "codebook", "codeword", "codepoint", "bit", "data", "program" and "chip" are interchangeable.

In some embodiments, the first information is used to trigger the UE to initiate a random access transmission to a candidate cell for a measurement of a TA. The UE 101 is triggered to initiate the random access transmission to the candidate cell after receiving the first information, and the random access transmission is used to measure a TA of the candidate cell.

In some embodiments, the name of the first information is not limited herein. For example, the first information may be referred to as "power indication information", "power ramping information", "first indication information", "first trigger information" or "power adjustment information".

In some embodiments, the first information includes at least one of a random access resource of the candidate cell and first beam information for initiating random access. The random access resource indicates the UE 101 to initiate the random access transmission to the candidate cell based on the resource, and the first beam information indicates the beam information for the random access transmission by the UE 101.

In some embodiments, the first information is downlink control information (DCI). The first information may further include: a frequency domain resource assignment, a random access preamble index, an uplink (UL)/Supplementary UL (SUL) indication, a service signal (SS)/physical broadcast channel (PBCH) index, a PRACH encoding index, a candidate cell identifier (such as cell ID) and reserved bit information. For example, this embodiment provides a kind of first information, and the first information includes a variety of information as shown in the following table:

| DCI | Random access preamble index | UL/SUL indication | SS/PBCH index | PRACH encoding index | Reserved bit information | Candidate cell ID |
|---|---|---|---|---|---|---|
| | 6 bits | 1 bit | 6 bits | 4 bits | X | N bits |

In some embodiments, terms "resource block (RB)", "physical RB (PRB)", "sub-carrier group (SCG)", "resource element group (REG)", "PRB pair", "RB pair", "resource element (RE)" and "sub-carrier" are interchangeable.

In some embodiments, the first information may also be used to determine whether the random access transmission is an initial transmission or a random access retransmission.

In some embodiments, the first information includes a first field.

In some embodiments, the first field indicates whether the random access transmission is the initial transmission or the random access retransmission through first encoding information. The transmission type of the random access transmission is indicated by a fixed encoding index. For example, if the first encoding information is "0/1", the random access transmission is determined to be the initial transmission. If the first encoding information is "1/0", it is determined that the random access transmission is the random access retransmission.

In some embodiments, the determination or judgment may be performed using a value represented by 1-bit (0 or 1), using a true/false value (boolean) represented as true or false, or by comparing numerical values (for example, comparing with a preset value), which is not limited herein.

In some embodiments, the terms "encoding information", "codebook", "codeword" and "pre-encoding matrix" are interchangeable. For example, the codebook may be a collection of one or more codewords/pre-encoding matrixes.

In some embodiments, the name of the first field is not limited herein. For example, the first field may also be referred to as "transmission indication information", "character information", "transmission type indication information", "transmission type encoding information" or "transmission frequency indication information".

In some embodiments, the first information includes a second field.

In some embodiments, the second field indicates that the random access transmission is the initial transmission, or indicates that the random access transmission is the random access retransmission and a quantity of random access retransmissions. For example, M is included in the second field. When M=0, the random access transmission is an initial transmission. When M≠0, the random access transmission is a retransmission, and M represents a quantity of random access retransmissions. Optionally, an initial transmission identifier is set according to actual needs. By comparing the second field with the initial transmission identifier, it is determined whether the corresponding random access transmission is an initial transmission or a retransmission. In some embodiments, if the second field matches the initial transmission identifier, it is determined that the random access transmission is an initial transmission. If the second field does not match the initial transmission identifier, a difference between second encoding information and the initial transmission identifier is determined as a quantity of random access retransmissions.

In some embodiments, whether the random access transmission is an initial transmission or a retransmission is determined based on an interval between the received first information and second information. The second information is used to trigger the UE to initiate the random access transmission to the candidate cell for the last measurement of the TA. After the interval between the first information and the second information is determined, if the interval is less than a preset interval threshold, it is determined that the random access transmission is a random access retransmission. For example, the interval between the first information received this time and the second information received last time is calculated. If the interval is less than the interval threshold, it is determined that the current random access transmission is a random access retransmission. If the interval is greater than or equal to the interval threshold, it is determined that this random access transmission is an initial transmission.

In some embodiments, terms "moment", "time point", "time" and "time position" are interchangeable, and terms "duration", "time period", "time window", "window" and "time" are also interchangeable.

In some embodiments, the first information includes the first field and the second field. The first field indicates whether the random access transmission is an initial transmission or a random access retransmission. If the random access transmission is a random access retransmission, the second field indicates the current quantity of random access retransmissions.

At step S2102, the network device 102 sends configuration information.

In some embodiments, the UE 101 receives the configuration information.

In some embodiments, the configuration information includes a power ramping step for a random access retransmission, and the first information indicates the UE 101 to perform a random access transmission. In order to improve the success rate of the random access retransmission, the power ramping is implemented for a first transmit power of the random access transmission, to obtain a TA of a candidate cell. In this embodiment, the power ramping step for the random access retransmission is indicated by the configuration information. Optionally, the first transmit power of the random access transmission is determined based on the power ramping step and the quantity of random access retransmissions. For example, when the quantity of random access retransmissions is determined to be 4 through the above steps, the first transmit power=initial transmit power+4×power ramping step.

At step S2103, the UE 101 determines the first transmit power of the random access transmission based on the first information and the power ramping step.

In some embodiments, the random access transmission is determined to be a random access retransmission based on the first information, and the first transmit power is determined based on the power ramping step. For example, when the first information indicates that the random access transmission performed by the UE 101 is a random access retransmission, the first transmit power is increased based on the power ramping step to obtain the first transmit power of the random access transmission. Each power ramping step is accumulated on the basis of the previous first transmit power of the last access transmission, so as to obtain the first transmit power of the random access transmission.

In some embodiments, the terms "component carrier (CC)", "cell", "frequency carrier" and "carrier frequency" are interchangeable.

In some embodiments, if the random access transmission is a random access retransmission, a quantity of random access retransmissions is determined, and the first transmit power is determined based on the quantity of random access retransmissions and the power ramping step. When it is determined that the random access transmission is the random access retransmission based on the first information, the quantity of random access retransmissions is determined. The quantity of random access retransmissions may be indicated by the first information or other information, and the method for determining the quantity of random access retransmissions is not limited in this embodiment. In order to improve the success rate of RACH reception, the transmit power needs to be increased each time the random access retransmission is performed. Therefore, the transmit power is increased each time the random access retransmission is performed, and each increased value of the first transmit power is considered as the power ramping step corresponding to the retransmission. The transmit power of this random access transmission=the quantity of random access retransmissions×power ramping step+initial transmit power.

In some embodiments, the quantity of random access retransmissions is determined based on the first information. The first information includes a third field, the third field indicates the quantity of random access retransmissions, and a maximum value of the third field represents a maximum number of times the transmit power ramping is allowed to be performed. For example, the first information includes a third field, and the third field indicates a triggered RACH's retransmission number. There is a limit on the value included in the third field, and a maximum value indicated by the third field is a maximum quantity that the UE 101 is allowed to performing the ramping processing.

In some embodiments, a retransmission counter is provided in the UE 101.

In some embodiments, the retransmission counter is used to count a number of transmissions of the random access transmission.

In some embodiments, the quantity of random access retransmissions is determined based on a retransmission counter. For example, when the UE 101 performs the random access transmission once, a count of the retransmission counter adds 1, so the quantity of random access retransmissions of the current random access transmission is determined by reading the count of the retransmission counter.

In some embodiments, the name of the retransmission counter is not limited. For example, it may also be referred to as "counter", "retransmission time counter", "frequency counter", "counting device" or "retransmission counting device".

In some embodiments, if it is determined that the UE conducts the random access transmission once, a quantity of random access transmissions is increased by 1 according to a retransmission counter. For example, the retransmission counter is applied to accumulate the quantity of random access transmissions of the UE 101, and after the UE 101 performs the random access transmission, a count of the retransmission counter is increased by one.

In some embodiments, after the quantity of random access retransmissions is obtained, a second transmit power for the random access transmission is determined based on the quantity of random access retransmissions and an initial transmit power of the random access transmission, and a minimum value between a maximum transmit power of the UE and the second transmit power is taken as the transmit power. For example, in this embodiment, when it is determined that the random access transmission is a random access retransmission, a quantity of random access retransmissions is determined. According to the quantity of random access retransmissions and an initial transmit power of the UE 101 for an initial transmission, the quantity of random access retransmissions is multiplied by a power ramping step and then added with the initial transmit power to obtain the second transmit power of the random access transmission. Then, a minimum value between an allowed maximum transmit power of the UE 101 and the second transmit power is selected as the first transmit power of the current random access transmission.

For example, the transmit power of the UE 101 is determined by the following equation:

$$P_{RACH} = min\{P_{CMAX}, P_{initial} + N \times Step\}$$

where $P_{RACH}$ represents the transmit power of the random access transmission, $P_{CMAX}$ represents the maximum transmit power the UE 101 is allowed, $P_{initial}$ represents the initial transmit power, N represents the quantity of random access retransmissions, and Step represents the power ramping step. Optionally, in an implementation, considering a path loss in an RACH transmission process, the path loss is added with the second transmit power to improve the success rate of RACH signal reception at the candidate cell.

In some embodiments, the initial transmit power of the UE 101 during the initial power transmission is calculated by the following equations:

$$P_{initial} = P_{target} + PL$$

$$P_{target} = \text{preambleReceivedTargetPower} + \text{DELTA\_PREAMBLE}$$
$$+ (\text{PREAMBLE\_POWER\_RAMPING\_COUNTER}$$
$$- 1) \times \text{PREAMBLE\_POWER\_RAMPING\_STEP} + \text{POWER\_OFFSET\_2STEP\_RA}$$

where $P_{initial}$ represents the initial transmit power, $P_{target}$ represents the preset transmit power, and PL represents a downlink reference signal path loss.

Moreover, preambleReceivedTargetPower represents a transmit power of an initial preamble, which is configured by radio resource control (RRC), DELTA_PREAMBLE represents a power influence value, and PREAMBLE_POWER_RAMPING_COUNTER represents the quantity of random access retransmissions. If the count of the counter is 1, 1 is the power ramping step for each retransmission, and an extra power offset is required when adopting a 2-step random access procedure.

In some embodiments, the transmit power of the UE 101 is calculated by the following equations:

$$P_{RACH} = \min\{P_{CMAX}, P_{target} + PL\}$$

$$P_{target} = \text{preambleReceivedTargetPower} + \text{DELTA\_PREAMBLE} + N \times Step + OFFSET$$

where OFFSET represents a power compensation value, which is set based on different transmit beams.

FIG. 2b is a schematic diagram of a method for adjusting a transmit power according to an embodiment of the disclosure. As illustrated in FIG. 2b, the UE 101 performs a first RACH transmission based on first information at t1, it receives the first information again at t2 and then performs a second RACH transmission based on the first information. However, due to certain reasons, the candidate cell failed to successfully receive the RACH transmission initiated at t2. When a third RACH transmission is triggered based on the first information at t3, the UE 101 determines that the RACH transmission is a retransmission based on the first information or an interval between t1 and t3, then performs the power ramping for the transmit power of the third RACH transmission at t3 based on the power ramping step in the first information, thereby improving the success rate of RACH reception. The reasons that affect the reception of RACH transmission at the candidate cell may include: lower RACH transmit power; obstruction during transmission; interference from other signals causing the candidate cell to fail to receive an RACH transmission signal; and timing conflicts between the RACH transmission signal and other uplink signals causing the candidate cell to fail to receive the RACH transmission signal, which is not limited in this embodiment.

In some embodiments, a random access transmission is determined to be an initial transmission based on the first information, and a power ramping value of the UE is reset. Optionally, in this embodiment, when the random access transmission is determined to be a retransmission, a transmit power of the random access retransmission is determined in the two following ways: (1) determining a quantity of random access retransmissions, and determining the transmit power of the random access retransmission based on the quantity of random access retransmissions, a power ramping step and the initial transmit power, i.e., transmit power=the quantity of random access retransmissions×power ramping step+initial transmit power; and (2) (the UE 101) accumulating a power ramping value of each retransmission, and when it is determined that the random access transmission is the random access retransmission, accumulating a power ramping step again on the accumulated value until it reaches a maximum accumulation time or a maximum accumulation value, to obtain the transmit power of the random access transmission.

When it is determined that the current random access transmission is the initial transmission based on the first information, it is necessary to reset the power ramping value of the UE 101, that is, reset the latest transmit power as an initial value.

In some embodiments, when it is determined that a random access transmission is an initial transmission, a value of a retransmission counter is reset to an initial value. In this embodiment, the UE 101 is provided with the retransmission counter, which is used to count a quantity of random access retransmissions. When the random access transmission is determined to be the initial transmission based on the first information, the retransmission counter is reset to restore its count to the initial value. For example, the initial value of the retransmission counter may be 0 or 1, and other values may be set for the retransmission counter according to actual needs, which is not limited in this embodiment.

In some embodiments, the first information includes a third field.

In some embodiments, the third field indicates whether a random access transmission is an initial transmission or a random access retransmission. When the random access transmission is the random access retransmission, it also indicates a quantity of random access retransmissions.

For example, if it is determine that the third field matches an initial transmission identifier, the power ramping value is reset, and the transmit power is determined based on the power ramping step and the reset power ramping value. If it is determined that the third field does not match the initial transmission identifier, a target power ramping value is determined based on fourth encoding information and the power ramping step, and the transmit power is determined based on the target power ramping value and the power ramping value. If the third field matches the initial transmission identifier, it is determined that this random access transmission is an initial transmission, the power ramping value of the UE 101 is reset to set the power value of a current RACH transmission to an initial transmit power, and the transmit power of the current random access transmission is determined based on the reset power ramping value and the power ramping step. The initial transmission identifier may be 0 or 1. If the third field does not match the initial transmission identifier, it is determined that this random access transmission is a random access retransmission, and the transmit power is determined based on the fourth encoding information corresponding to the third field. Optionally, the transmit power of the random access transmission is determined by the following equation:

$$P_{RACH} = (N - N_o) \times \text{Step} + P_{initial}$$

where $P_{RACH}$ represents the transmit power of the random access transmission, N represents the fourth encoding information, $N_o$ represents the initial transmission identifier, Step represents the power ramping step, and $P_{initial}$ represents the initial transmit power.

In some embodiments, the first information includes a fourth field.

In some embodiments, the fourth field is used to update a transmit beam of the random access transmission.

In some embodiments, the name of the fourth field is not limited here. For example, it may also be referred to as "transmit beam update information", "beam update information", or "beam information".

In some embodiments, the UE 101 updates a transmit beam of a random access transmission based on a fourth field in first information. When the transmit beam is updated, it means that beam resources occupied by an RACH for the current random access transmission are different from those occupied by an RACH in the last random access transmission. Therefore, it is necessary to perform the random access transmission again based on the updated transmit beam, and the current random access transmission is an initial transmission. When the transmit beam is updated through the fourth field, a power ramping value of the current random access transmission is reset. Based on the fourth field, the reset power ramping value and a power ramping step, a transmit power of the current random access transmission is determined.

In some embodiments, a retransmission counter is provided in the UE 101. When the UE 101 updates a transmit beam of a random access transmission based on a fourth field in first information, a value of the retransmission counter is reset to an initial value, which may be 0 or 1.

In some embodiments, the first information includes a fifth field.

In some embodiments, the fifth field indicates whether a random access transmission is an initial transmission or a random access retransmission. When the random access transmission is a random access retransmission, the fifth field indicates a quantity of random access retransmissions.

In some embodiments, the name of the fifth field is not limited herein. For example, the fifth field may also be referred to as "transmission frequency indication information", "transmission frequency information", "transmission type encoding information", "transmission frequency encoding information", or "transmission character information".

In some embodiments, the first information includes a fourth field. When the fourth field updates a transmit beam of a random access transmission, a power ramping value of the current random access transmission is reset based on the fifth field when the fifth field matches an initial transmission identifier. That is, when the first information includes the fourth field, the network device 102 updates the fifth field in first information, replaces the fifth field with the initial transmission identifier, and instructs the UE to reset the power ramping value through the fifth field.

In some embodiments, the first information includes a sixth field.

In some embodiments, the sixth field indicates a quantity of random access retransmissions.

In some embodiments, the name of the sixth field is not limited herein. For example, the sixth field may also be referred to as "transmission indication information", "character information", "transmission type indication information", "transmission type encoding information", or "transmission frequency indication information".

In some embodiments, the first information includes a fourth field. When a transmit power of a random access transmission is updated through the fourth field, an quantity of historical random access retransmissions of the UE before beam switching is determined, and the transmit power is determined based on a sixth field, the quantity of historical random access retransmissions and a power ramping step. Optionally, the transmit power of the random access transmission is determined by the following equation:

$$P_{RACH} = (\mathrm{N} - N_{old}) \times \mathrm{Step} + P_{initial}$$

where $P_{RACH}$ represents the transmit power of the random access transmission, N represents the sixth field, $N_{old}$ represents the quantity of historical random access retransmissions, Step represents the power ramping step, and $P_{initial}$ represents the initial transmit power.

At step S2104, the UE 101 sends third information based on the first transmit power.

In some embodiments, the network device 102 receives the third information.

In some embodiments, the third information is used to trigger a candidate cell to perform a measurement of a TA.

In some embodiments, the name of the third information is not limited herein. For example, the third information may also be referred to as "random access MSG1/MSGA" or "preamble sequence".

At step S2105, the network device 102 performs the measurement of the TA based on second information.

In some embodiments, the third information is used to measure a TA of a candidate cell corresponding to the UE 101.

The communication method according to the embodiments of the disclosure may include at least one of steps S2101-S2105. For example, step 1 is implemented as an independent embodiment, step 2 is implemented as an independent embodiment, steps 1+3 are implemented as an independent embodiment, or steps 1+2+3 are implemented as an independent embodiment, which is not limited herein.

In some embodiments, step S2101 and step S2102 may be performed in a reverse order or simultaneously.

In some embodiments, step S2103, step S2104 and step S2105 are optional, and one or more of these steps may be omitted or replaced in different embodiments.

In some embodiments, step S2101 and step S2102 are optional, and one or more of these steps may be omitted or replaced in different embodiments.

In some embodiments, reference can be made to other optional implementations described before or after the description corresponding to FIG. 2a.

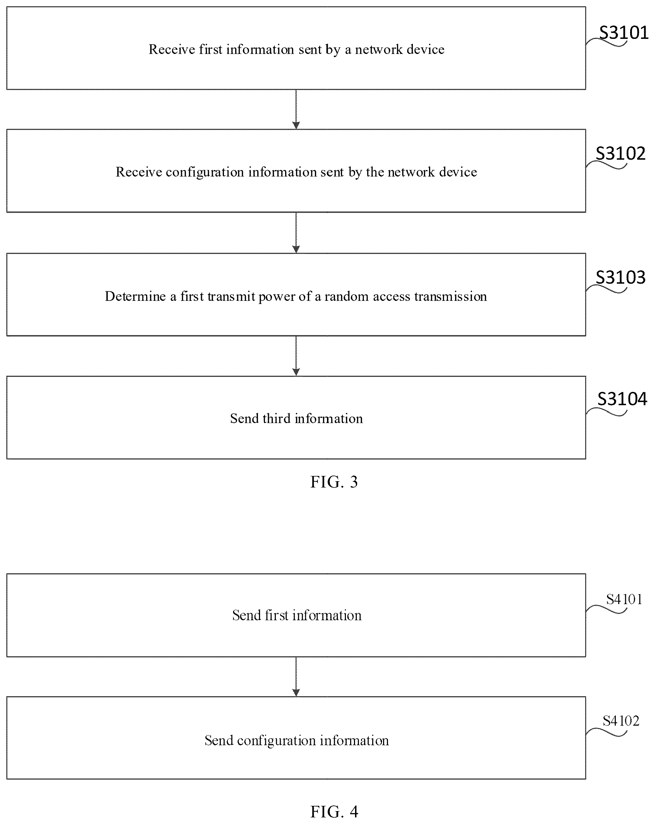

FIG. 3 is a flowchart of a method for adjusting a transmit power according to an embodiment of the disclosure. As illustrated in FIG. 3, the embodiment of the disclosure provides a method for adjusting a transmit power. The method is performed by a UE, and includes the following steps.

At step S3101, first information sent by the network device is received.

In some embodiments, the UE 101 receives the first information sent by the network device 102, and it may also receive the first information sent by other devices, which is not limited herein.

In some embodiments, the UE 101 obtains the first information specified by a protocol.

In some embodiments, the UE 101 obtains the first information through an RRC signaling, a medium access control control element (MAC CE) signaling or a DCI signaling of the network.

In some embodiments, the UE 101 obtains the first information through processing.

In some embodiments, the first information is sent by the network device 102 to the UE 101 through a serving cell.

In some embodiments, when a current serving cell detects that the UE 101 is moving far away from it, it generates the first information and sends the information to the UE 101 when cell handover is required, so the UE 101 select a target cell as a serving cell from candidate cells.

In some embodiments, step S3101 may be omitted, the UE 101 autonomously realizes a function indicated by the first information or a default function.

For the optional implementations of step S3101 reference may be made to the optional implementations of step S2101 in FIG. 2a and other related parts of the embodiment involved in FIG. 2a, which will not be repeated here.

At step S3102, configuration information sent by the network device is received.

In some embodiments, the configuration information includes a power ramping step for a random access retransmission.

In some embodiments, the UE 101 receives the configuration information sent by the network device 102, or it may receive the configuration information sent by other devices, which is not limited herein.

In some embodiments, the UE 101 obtains the configuration information specified by a protocol.

In some embodiments, the UE 101 obtains the configuration information from one or more upper layers.

In some embodiments, the UE 101 obtains the configuration information through processing.

For the optional implementations of step S3102 reference may be made to the optional implementations of step S2102 in FIG. 2a and other related parts of the embodiment involved in FIG. 2a, which will not be repeated here.

At step S3103, a first transmit power of a random access transmission is determined.

In some embodiments, the UE 101 determines a transmit power of the random access transmission based on the first information and the power ramping step.

In some embodiments, the UE 101 may also determine the transmit power of the random access transmission based on the power ramping step in the configuration information.

For the optional implementations of step S3103 reference may be made to the optional implementations of step S2103 in FIG. 2a and other related parts of the embodiment involved in FIG. 2a, which will not be repeated here.

At step S3104, third information is sent.

In some embodiments, the UE 101 sends the third information based on a transmit power.

In some embodiments, the third information is sent to a candidate cell, or it may also be sent to other cells, which is not limited herein.

For the optional implementations of step S3104 reference may be made to the optional implementations of step S2104 in FIG. 2a and other related parts of the embodiment involved in FIG. 2a, which will not be repeated here.

The communication method according to the embodiments of the disclosure may include at least one of steps S3101-S3103. For example, step 1 may be implemented as an independent embodiment, step 2 may be implemented as an independent embodiment, steps 1+3 may be implemented as an independent embodiment, or steps 1+2+3 may be implemented as an independent embodiment, which is not limited herein.

In some embodiments, steps S3101 and S3102 may be performed in a reverse order or simultaneously.

In some embodiments, step S3104 is optional, and one or more of these steps may be omitted or replaced in different embodiments.

FIG. 4 is a flowchart of a method for adjusting a transmit power according to an embodiment of the disclosure. As illustrated in FIG. 4, an embodiment of the disclosure provides a method for adjusting a transmit power. The method is performed by a network device, and includes the following steps.

At step S4101, first information is sent.

In some embodiments, the first information is used to trigger a UE to initiate a random access transmission to a candidate cell for a measurement of a TA. The first information includes at least one of a random access resource of the candidate cell and first beam information for initiating random access, and the first information is sent to the UE by a serving cell of the UE.

In some embodiments, the network device 102 sends the first information to the UE 101, and it may also send the first information to other devices, which is not limited herein.

In some embodiments, the network device 102 may send the first information to other devices, and the other devices send the first information to the UE 101.

In some embodiments, the first information is used to trigger the UE 101 to perform the step of initiating the random access transmission for a measurement of a TA. For the optional implementations of step S4101 reference may be made to the optional implementations of steps S2101 and S2103 in FIG. 2a and other related parts of the embodiment involved in FIG. 2, which will not be repeated here.

Or, for the optional implementations of step S4101 reference may be made to the optional implementations of steps S2101 in FIG. 2a and other related parts of the embodiment involved in FIG. 2, which will not be repeated here.

At step S4102, configuration information is sent.

In some embodiments, the configuration information includes a power ramping step for performing a random access retransmission. The power ramping step is used to instruct the UE to determine a transmit power for the random access transmission based on the first information and the power ramping step.

In some embodiments, the network device 102 sends the configuration information to the UE 101, and it may also send the configuration information to other device, which will not be repeated herein.

In some embodiments, the network device 102 obtains second information through processing.

For the optional implementations of step S4102 reference may be made to the optional implementations of steps S2102 in FIG. 2a and other related parts of the embodiment involved in FIG. 2a, which will not be repeated here.

The method for adjusting the transmit power according to the embodiments of the disclosure may include at least one of steps S4101-S4102. For example, step 1 may be implemented as an independent embodiment, step 2 may be implemented as an independent embodiment, and steps 1+2 may be implemented as an independent embodiment, which is not limited herein.

In some embodiments, steps S4101-S4102 may be performed in a reverse order or simultaneously.

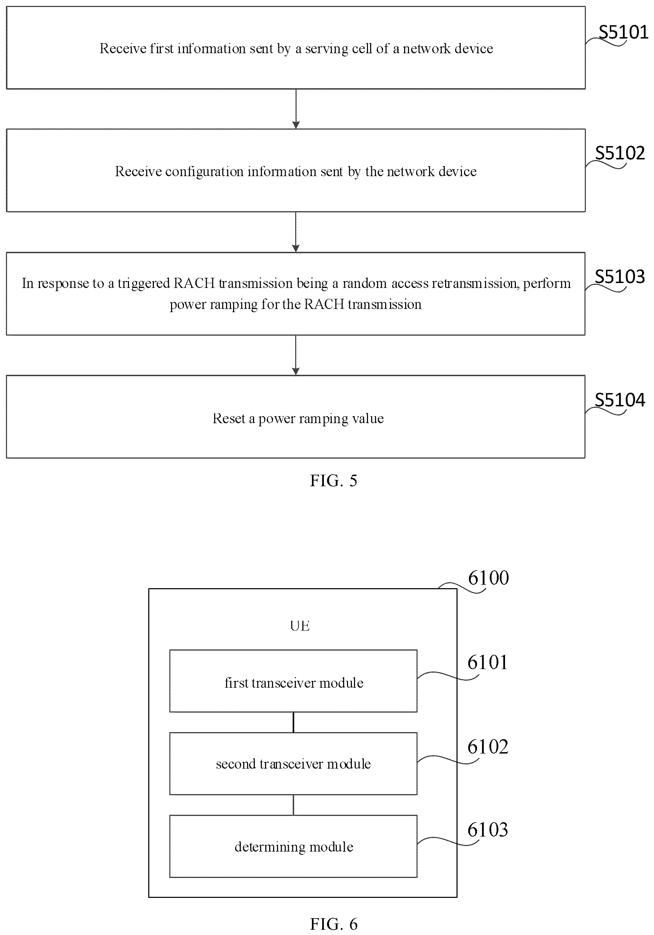

FIG. 5 is a flowchart of a method for adjusting a transmit power according to an embodiment of the disclosure. As illustrated in FIG. 5, an embodiment of the disclosure provides a method for adjusting a transmit power, and the method includes the following steps.

At step S5101, first information sent by a serving cell of the network device is received.

In some embodiments, the first information is used to trigger the UE to initiate random access to a candidate cell for TA measurement.

In some embodiments, the first information at least includes random access resource information sent by the candidate cell and beam information of random access.

Optionally, according to the first information, it is determined whether a currently triggered RACH transmission is an initial transmission or a random access retransmission.

In some embodiments, when the UE is triggered to initiate an RACH transmission to the candidate cell through the first information, 1-bit information may be included in the first information to indicate whether a currently triggered RACH transmission is an initial transmission or a random access retransmission. For example, when the bit information is 1/0, the current transmission is an initial transmission, and when the bit information is 0/1, the current transmission is a random access retransmission.

In some embodiments, the first information includes M-bit information, which is used to indicate to the UE whether the currently triggered RACH transmission is an initial transmission or a random access retransmission. If the current transmission is a random access retransmission, a quantity of random access retransmissions is determined.

In some embodiments, it is stipulated that if M=0 or 1, this RACH transmission is an initial transmission. If M>1, this RACH transmission is a retransmission, and a quantity of random access retransmissions is M-1. If it is specified that if M=0, this RACH transmission is an initial transmission, and if M>0, it indicates that this RACH transmission is a retransmission, and M is a quantity of random access retransmissions.

In some embodiments, the UE may determine whether a transmission is a retransmission or not based on an interval between two triggered RACH transmissions for sending the first information to the same candidate cell. When the interval is less than a threshold, it is considered that this RACH transmission is a random access retransmission.

For the optional implementations of step S5101 reference may be made to the optional implementations of steps S2101 in FIG. 2a and other related parts of the embodiment involved in FIG. 2a, which will not be repeated here.

At step S5102, configuration information sent by the network device is received.

In some embodiments, the configuration information at least includes a power ramping step every time power ramping is performed.

For the optional implementations of step S5102 reference may be made to the optional implementations of steps S2101 in FIG. 2a and other related parts of the embodiment involved in FIG. 2a, which will not be repeated here.

At step S5103, in response to a triggered RACH transmission being a random access retransmission, power ramping is performed for the RACH transmission.

In some embodiments, in response to the RACH transmission being a random access retransmission, a quantity of random access retransmissions is determined.

In some embodiments, first information indicates the triggered RACH transmission's retransmission number, and N is an indicated number M or (M-1). A maximum value indicated by M-bit information is a maximum number of times the UE is allowed to perform power ramping.

In some embodiments, a counter is introduced to record the retransmission number of the current RACH transmission. An initial value of the counter is 0 or 1. If the initial value is 0, the quantity of random access retransmissions=value displayed on the counter. If the initial value is 1, the quantity of random access retransmissions= value displayed on the counter-1.

In some embodiments, the power ramping value of the RACH transmission is $N \times Step$, where N represents the quantity of random access retransmissions of the RACH transmission, and Step represents a power ramping step.

In some embodiments, the transmit power of the current RACH transmission triggered by the first information is calculated by the following equation:

$$P_{RACH} = min\{P_{CMAX}, P_{initial} + N \times Step\}$$

where $P_{RACH}$ represents the transmit power of the random access transmission, $P_{CMAX}$ represents a maximum transmit power the UE 101 is allowed, $P_{initial}$ represents the initial transmit power, N represents the quantity of random access retransmissions, and Step represents the power ramping step.

For optional implementations of step S5103 reference may be made to the optional implementations of steps S2103 in FIG. 2a and other related parts of the embodiment involved in FIG. 2a, which will not be repeated here.

At step S5104, a power ramping value is reset.

In some embodiments, if the triggered RACH transmission is an initial transmission, the power ramping value is set to 0.

In some embodiments, if a counter is introduced, when it is determined that an RACH transmission is an initial transmission, the counter is reset to an initial value of 0 or 1.

In some embodiments, if the first information indicates a number of times, whether to reset power ramping is determined based on M. When M matches the initial value, power ramping is reset. When M does not match the initial value, power ramping is performed through accumulation on the current power ramping value to obtain the transmit power of the current RACH transmission.

In some embodiments, if the first information indicates that the transmission is a retransmission, a new beam is also indicated in the first information when triggering the UE. The UE is instructed to perform the RACH transmission based on the new beam information, so it is necessary to reset the power ramping value.

In some embodiments, a counter is introduced. When new beam information is indicated in the first information, or beam information of the current RACH transmission is updated through the first information, a value of the counter is reset to an initial value of 0 or 1.

In some embodiments, if a number of times is indicated in the first information, M in the first information is an initial value of 0 or 1.

In some embodiments, when new beam information is indicated in the first information, or beam information of a current RACH transmission is updated through the first information, a transmit power of the current RACH transmission is calculated by the following equation:

$$P_{RACH} = (\text{N} - N_{old}) \times \text{Step} + P_{initial}$$

where $P_{RACH}$ represents a transmit power of a random access transmission, N represents a sixth field, $N_{old}$ represents an quantity of historical random access retransmissions, Step represents a power ramping step, and $P_{initial}$ represents an initial transmit power.

For the optional implementations of step S5104 reference may be made to the optional implementations of steps S2103 in FIG. 2a and other related parts of the embodiment involved in FIG. 2a, which will not be repeated here.

The communication method according to the embodiments of the disclosure may include at least one of steps S5101-S5104. For example, step 1 may be implemented as an independent embodiment, step 2 may be implemented as an independent embodiment, steps 1+2+3 may be implemented as an independent embodiment, and steps 1+2+4 may be implemented as an independent embodiment, which is not limited herein.

In some embodiments, steps S5101 and S5102 may be performed in a reverse order or simultaneously.

In some embodiments, steps S5103 and S5104 are optional, and one or more of these steps may be omitted or replaced in different embodiments.

In the embodiments of the disclosure, some or all of the steps and their optional implementations in an embodiment may be arbitrarily combined with some or all of the steps in other embodiments, or may be arbitrarily combined with optional implementations in other embodiments.

The embodiments of the disclosure provide an apparatus for implementing any of the above methods, and the apparatus includes units/modules for implementing steps performed by the UE in any of the above methods. The embodiments of the disclosure also provide another apparatus including units/modules for implementing steps performed by the network device (e.g., AN device, core network functional node, core network device, etc.) in any of the above methods.

It should be understood that the above units/modules in the above apparatus are divided based on their logical functions, and they may be fully or partially integrated into a single physical entity or may be physically separated in practical applications. In addition, the units/modules in the above apparatus may be implemented by software called by a processor. For example, the apparatus includes a processor connected to a memory. The memory stores instructions, and the processor calls the instructions stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. The units/modules in the apparatus may be implemented in the form of a hardware circuit. The functions of some or all of the units/modules may be achieved through the design of the hardware circuit. The hardware circuit is understood as one or more processors. For example, in an implementation, the hardware circuit is an application-specific integrated circuit (ASIC). The functions of some or all of the units/modules are achieved through the design of a logical relationship between components in the circuit. As another example, in another implementation, the hardware circuit may be implemented through a programmable logic device (PLD). Taking a field programmable gate array (FPGA) as an example, it may include a large number of logical gates, and connection relationships between the logical gates are configured through a configuration file, thereby implementing the functions of some or all of the units/modules. All the units/modules of the above apparatus may be implemented entirely through software called by the processor, or entirely through the hardware circuit, or partially through software called by the processor and partially through the hardware circuit.

In the embodiments of the disclosure, the processor is a circuit for signal processing. In an implementation, the processor may be a circuit for instruction reading and executing, such as a CPU, a micro-processor, a graphics processing unit (GPU) (which is understood as a type of micro-processor), or a digital signal processor (DSP). In another implementation, the processor implements certain functions through the logical relationship of the hardware circuit. The relationship may be fixed or re-configurable. For example, the processor may be a hardware circuit implemented by an ASIC or a PLD, such as an FPGA. In a re-configurable hardware circuit, the procedure for the processor to load the configuration file and configure the hardware circuit is understood as a procedure for the processor to load instructions and implement the functions of some or all of the above units/modules. In addition, the processor may also be an AI-designed hardware circuit, i.e., an ASIC, such as a neural network processing unit (NPU), a tensor processing unit (TPU) and a deep learning processing unit (DPU).

FIG. 6 is a schematic structural diagram of a UE according to an embodiment of the disclosure. As illustrated in FIG. 6, the UE 6100 include at least one of a first transceiver module 6101, a second transceiver module 6102 or a determining module 6103.

In some embodiments, the first transceiver module 6101 is configured to receive first information sent by a network device, in which the first information is used to trigger the UE to initiate a random access transmission to a candidate cell for a measurement of a TA, and the first information includes at least one of a random access resource of the candidate cell or first beam information for initiating random access. The second transceiver module 6102 is configured to receive configuration information sent by the network device, in which the configuration information includes a power ramping step for performing a random access retransmission. The determining module 6103 is configured to determine a first transmit power for the random access transmission based on the first information and the power ramping step. Optionally, the first transceiver module 6101 is configured to perform at least one of the communication steps such as receiving performed by the UE 101 in any of the above methods, which will not be repeated herein. Optionally, the second transceiver module 6102 is configured to perform at least one of other steps performed by the UE 101 in the method, which will not be repeated herein. Optionally, the determining module 6103 is configured to perform at least one of the determination steps performed by the UE 101 in the method, which will not be repeated herein.

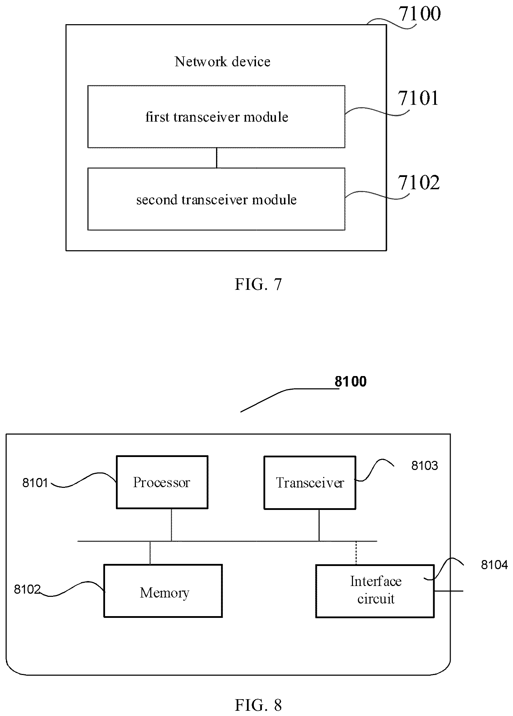

FIG. 7 is a schematic structural diagram of a network device according to an embodiment of the disclosure. As illustrated in FIG. 7, the network device 7100 includes at least one of a first transceiver module 7101 or a second transceiver module 7102.

In some embodiments, the first transceiver module 7101 is configured to send first information, in which the first information is used to trigger a UE to initiate a random access transmission to a candidate cell for a measurement of a TA, and the first information includes at least one of a random access resource of the candidate cell or first beam information for initiating random access. The second transceiver module 7102 is configured to send configuration information, in which the configuration information includes a power ramping step for performing a random access retransmission, and the power ramping step indicates the UE to determine a first transmit power for the random access transmission based on the first information and the power ramping step. Optionally, the first transceiver module 7101 is configured to perform at least one of the communication steps such as sending/receiving performed by the network device 102 in any of the above methods, which will not be repeated herein. Optionally, the second transceiver module 7102 is configured to perform at least one of other steps performed by the network device 102 in the method, which will not be repeated herein.

FIG. 8 is a schematic structural diagram of a communication device 8100 according to an embodiment of the disclosure. The communication device 8100 may be a network device (e.g., an AN device or a core network device), a terminal (e.g., a UE), a chip, chip system or processor that supports the network device to implement any of the above methods, or a chip, chip system or processor that supports the terminal to implement any of the above methods. The communication device 8100 is used to implement the methods described in the above method embodiments and can refer to the descriptions in the above method embodiments.

As illustrated in FIG. 8, the communication device 8100 includes one or more processors 8101. The processor 8101 may be a general-purpose processor or a dedicated processor, such as a baseband processor or a central processor. The baseband processor is used to process communication protocols and communication data, while the central processor is used to control the communication device (e.g., a base station, a baseband chip, a terminal, a terminal chip, a DU or a CU), execute programs, and process data of the programs. The communication device 8100 is used to implement any of the above methods.

In some embodiments, the communication device 8100 further includes one or more memories 8102 for storing instructions. Optionally, all or part of the memories 8102 may be memories external to the communication device 8100.

In some embodiments, the communication device 8100 further includes one or more transceivers 8103. When the communication device 8100 includes one or more transceivers 8103, the transceivers 8103 implement at least one of the communication steps such as sending and/or receiving in any of the above methods, and the processors 8101 implement at least one of the remaining steps in the method.

In some embodiments, the transceiver includes a receiver and/or a transmitter. The receiver and the transmitter may be separated or integrated together. Optionally, terms such as "transceiver", "transceiver unit", "transceiver machine" and "transceiver circuit" are interchangeable. Terms such as "transmitter", "transmitter unit", "transmitter machine" and "transmitter circuit" are interchangeable. Moreover, terms such as "receiver", "receiver unit", "receiver machine" and "receiver circuit" are interchangeable.

In some embodiments, the communication device 8100 includes one or more interface circuits 8104. Optionally, the interface circuits 8104 are connected to the memories 8102. The interface circuits 8104 are used to receive signals from the memories 8102 or other devices and send signals to the memories 8102 or other devices. For example, the interface circuits 8104 read instructions stored in the memories 8102 and send the instructions to the processors 8101.

The communication device 8100 described in the embodiments may be a network device or a terminal, but the scope of the communication device 8100 is not limited to those described in the disclosure, and the structure of the communication device 8100 is not limited by FIG. 8. The communication device may be a standalone device or part of a larger device. For example, the communication device may be: (1) a standalone integrated circuit (IC), chip, chip system or sub-system; (2) a collection of one or more ICs (optionally, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

The disclosure also provides a storage medium. The storage medium stores instructions, when the instructions are executed by the communication device 8100, the communication device 8100 is caused to implement any of the above methods. Optionally, the storage medium may be an electronic storage medium or a computer-readable storage medium, which is not limited herein. The storage medium may also be a storage medium readable by other devices. Optionally, the storage medium may be a non-transitory storage medium or a transitory storage medium, which is not limited herein.

The disclosure also provides a program product. When the program product is executed by the communication device 8100, the communication device 8100 is caused to implement any of the above methods. Optionally, the program product is a computer program product.

The disclosure also provides a computer program. When the computer program is executed by a computer, the computer is caused to implement any of the above methods.

**Claims**

1. A method for adjusting a transmit power, performed by a user equipment, comprising:

   receiving first information sent by a network device, wherein the first information is used to trigger the user equipment to initiate a random access transmission to a candidate cell for a measurement of a timing advance (TA), the first information comprises at least one of a random access resource of the candidate cell or first beam information for initiating random access, and the first information is sent to the user equipment by a serving cell of the user equipment;
   receiving configuration information sent by the network device, wherein the configuration information comprises a power ramping step for performing a random access retransmission; and
   determining a first transmit power for the random access transmission based on the first information and the power ramping step.

2. The method of claim 1, further comprising:
   determining whether the random access transmission is an initial transmission or the random access retransmission based on the first information.

3. The method of claim 2, wherein the first information comprises a first field, and the first field indicates that the random access transmission is the initial transmission or indicates that the random access transmission is the random access retransmission.

4. The method of claim 2, wherein the first information comprises a second field, and the second field indicates that the random access transmission is the initial transmission or indicates a quantity of random access retransmissions.

5. The method of claim 4, further comprising:

   in response to the second field matching an initial transmission identifier, determining that the random access transmission is the initial transmission; and
   in response to the second field not matching the initial transmission identifier, determining that the random access transmission is the random access retransmission.

6. The method of claim 2, wherein determining whether the random access transmission is the initial transmission or the random access retransmission based on the first information comprises:

determining an interval between the first information and second information, wherein the second information is used to trigger the user equipment to initiate the random access transmission to the candidate cell for a last measurement of the TA; and
in response to the interval being less than a preset interval threshold, determining that the random access transmission is the random access retransmission.

7. The method of claim 2, wherein determining the first transmit power for the random access transmission based on the first information and the power ramping step comprises:

determining that the random access transmission is the random access retransmission based on the first information; and
determining the first transmit power based on the power ramping step.

8. The method of claim 7, wherein determining the first transmit power based on the power ramping step comprises:

in response to the random access transmission being the random access retransmission, determining a quantity of random access retransmissions; and
determining the first transmit power based on the quantity of random access retransmissions and the power ramping step.

9. The method of claim 8, wherein the first information comprises a third field for indicating the quantity of random access retransmissions, and determining the quantity of random access retransmissions comprises:
determining the quantity of random access retransmissions based on the third field.

10. The method of claim 8, wherein determining the quantity of random access retransmissions comprises:
determining the quantity of random access retransmissions based on a retransmission counter.

11. The method of claim 10, further comprises:

determining that the user equipment performs the random access transmission once; and
accumulating a quantity of random access transmissions based on the retransmission counter.

12. The method of claim 8, wherein determining the first transmit power based on the quantity of random access retransmissions and the power ramping step comprises:

obtaining the quantity of random access retransmissions;
determining a second transmit power for the random access transmission based on the quantity of random access retransmissions and an initial transmit power of the random access transmission; and
determining a minimum value between a maximum transmit power of the user equipment and the second transmit power as the first transmit power.

13. The method of claim 1, wherein determining the first transmit power for the random access transmission based on the first information and the power ramping step comprises:

determining, based on the first information, that the random access transmission is an initial transmission, and resetting a power ramping value of the user equipment; and
determining the first transmit power based on the power ramping step and the power ramping value reset.

14. The method of claim 13, further comprising:
resetting a value of a retransmission counter to an initial value.

15. The method of claim 1, wherein the first information comprises a third field, and determining the first transmit power for the random access transmission based on the first information and the power ramping step comprises:

in response to the third field matching an initial transmission identifier, determining to reset a power ramping value;

and
determining the first transmit power based on the power ramping step and the power ramping value reset; or
in response to the third field not matching an initial transmission identifier, determining a target power ramping value based on the third field and the power ramping step; and
determining the first transmit power based on the target power ramping value and a power ramping value.

16. The method of claim 1, wherein the first information comprises a fourth field for updating a transmit beam of the random access transmission, and determining the first transmit power for the random access transmission based on the first information and the power ramping step comprises:

in response to the fourth field updating the transmit beam of the random access transmission, resetting a power ramping value; and
determining the first transmit power based on the fourth field, the power ramping value reset and the power ramping step.

17. The method of claim 16, further comprising:
resetting a value of a retransmission counter to an initial value.

18. The method of claim 16, wherein the first information comprises a fifth field for indicating that the random access transmission is an initial transmission, and resetting the power ramping value comprises:
in response to the fifth field matching an initial transmission identifier, resetting the power ramping value based on the fifth field.

19. The method of claim 16, wherein the first information comprises a sixth field for indicating a quantity of random access retransmissions, and determining the first transmit power based on the fourth field, the power ramping value reset and the power ramping step comprises:

determining a quantity of historical random access retransmissions of the user equipment before a beam switching; and
determining the first transmit power based on the sixth field, the quantity of historical random access retransmissions and the power ramping step.

20. A method for adjusting a transmit power, performed by a network device, comprising:

sending first information, wherein the first information is used to trigger a user equipment to initiate a random access transmission to a candidate cell for a measurement of a timing advance (TA), the first information comprises at least one of a random access resource of the candidate cell or first beam information for initiating random access, and the first information is sent to the user equipment by a serving cell of the user equipment; and
sending configuration information, wherein the configuration information comprises a power ramping step for performing a random access retransmission, wherein the user equipment determines a first transmit power for the random access transmission based on the first information and the power ramping step.

21. The method of claim 20, wherein the first information comprises a first field, and the first field indicates that the random access transmission is an initial transmission or indicates that the random access transmission is the random access retransmission.

22. The method of claim 20, wherein the first information comprises a second field, and the second field indicates that the random access transmission is an initial transmission or indicates a quantity of random access retransmissions.

23. The method of claim 22, further comprising:

in response to the second field matching an initial transmission identifier, determining that the random access transmission is the initial transmission; and
in response to the second field not matching the initial transmission identifier, determining the quantity of random access retransmissions based on the second field.

24. The method of claim 20, wherein the first information comprises a fourth field for indicating the user equipment to update a transmit beam of the random access transmission, and the first transmit power is determined based on the fourth field.

25. A method for adjusting a transmit power, comprising:

sending, by a network device, first information to a user equipment, wherein the first information is used to trigger the user equipment to initiate a random access transmission to a candidate cell for a measurement of a timing advance (TA), and the first information comprises at least one of a random access resource of the candidate cell or first beam information for initiating random access;

sending, by the network device, configuration information to the user equipment, wherein the configuration information comprises a power ramping step for performing a random access retransmission; and

determining, by the user equipment, a first transmit power for the random access transmission based on the first information and the power ramping step.

26. A user equipment, comprising:

a first transceiver module, configured to receive first information sent by a network device, wherein the first information is used to trigger the user equipment to initiate a random access transmission to a candidate cell for a measurement of a timing advance (TA), the first information comprises at least one of a random access resource of the candidate cell or first beam information for initiating random access, and the first information is sent to the user equipment by a serving cell of the user equipment;

a second transceiver module, configured to receive configuration information sent by the network device, wherein the configuration information comprises a power ramping step for performing a random access retransmission; and

a determining module, configured to determine a first transmit power for the random access transmission based on the first information and the power ramping step.

27. A network device, comprising:

a first transceiver module, configured to send first information, wherein the first information is used to trigger a user equipment to initiate a random access transmission to a candidate cell for a measurement of a timing advance (TA), the first information comprises at least one of a random access resource of the candidate cell or first beam information for initiating random access, and the first information is sent to the user equipment by a serving cell of the user equipment; and

a second transceiver module, configured to send configuration information, wherein the configuration information comprises a power ramping step for performing a random access retransmission, and the power ramping step and the first information are configured for the user equipment to determine a first transmit power for the random access transmission.

28. A user equipment, comprising:

one or more processors;

wherein the user equipment is configured to implement the method for adjusting the transmit power of any one of claims 1-19.

29. A network device, comprising:

one or more processors;

wherein the network device is configured to implement the method for adjusting the transmit power of any one of claims 20-22.

30. A communication system, comprising a terminal and a network device, wherein the terminal is configured to implement the method for adjusting the transmit power of any one of claims 1-19, and the network device is configured to implement the method for adjusting the transmit power of any one of claims 20-22.

31. A storage medium, wherein the storage medium stores instructions, and when the instructions are run by a communication device, the communication device is caused to implement the method for adjusting the transmit power of any one of claims 1-19 or the method for adjusting the transmit power of any one of claims 20-22.

Communication system 100

UE 101 —— Network device 102

FIG. 1a

Cell 2

UE □

TRP

Cell 1

FIG. 1b

The network device 102 sends first information to the UE 101 — S2101

The network device 102 sends configuration information — S2102

The UE 101 determines the first transmit power of the random access transmission based on the first information and the power ramping step — S2103

The UE 101 sends third information based on the first transmit power — S2104

the network device 102 performs a measurement of TA Based on the third information — S2105

FIG. 2a

| First information | RACH | First information | RACH | First information | RACH |
| t1 | | t2 | | t3 | |

FIG. 2b

Receive first information sent by a network device — S3101

Receive configuration information sent by the network device — S3102

Determine a first transmit power of a random access transmission — S3103

Send third information — S3104

FIG. 3

Send first information — S4101

Send configuration information — S4102

FIG. 4

Receive first information sent by a serving cell of a network device $\quad$ S5101

Receive configuration information sent by the network device $\quad$ S5102

In response to a triggered RACH transmission being a random access retransmission, perform power ramping for the RACH transmission $\quad$ S5103

Reset a power ramping value $\quad$ S5104

FIG. 5

6100

UE

first transceiver module $\quad$ 6101

second transceiver module $\quad$ 6102

determining module $\quad$ 6103

FIG. 6

7100

Network device

| first transceiver module | 7101

| second transceiver module | 7102

FIG. 7

**8100**

Processor 8101

Transceiver 8103

Memory 8102

Interface circuit 8104

FIG. 8

**EP 4 738 948 A1**

## INTERNATIONAL SEARCH REPORT

| International application No. |
|---|
| **PCT/CN2023/103519** |

### A. CLASSIFICATION OF SUBJECT MATTER

H04W 52/36(2009.01)i; H04W 74/08(2024.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; EPTXT; WOTXT; 3GPP: 随机接入, 前导, 功率, 调整, 提升, 抬升, 爬升, 步长, 次数, 重传, 定时提前, 时间提前, RACH, preamble, power, adjust, ramp, step, retransmission, TA, timing advance

### C. DOCUMENTS CONSIDERED TO BE RELEVANT

| Category* | Citation of document, with indication, where appropriate, of the relevant passages | Relevant to claim No. |
|---|---|---|
| A | CN 108282276 A (BEIJING SAMSUNG TELECOM R&D CENTER et al.) 13 July 2018 (2018-07-13) description, paragraphs [0047]-[0127] and [0255]-[0267] | 1-31 |
| A | CN 115997468 A (BEIJING XIAOMI MOBILE SOFTWARE CO., LTD.) 21 April 2023 (2023-04-21) description, paragraphs [0118]-[0135] | 1-31 |
| A | CN 112188383 A (HUAWEI TECHNOLOGIES CO., LTD.) 05 January 2021 (2021-01-05) entire document | 1-31 |
| A | US 2021136823 A1 (LG ELECTRONICS INC.) 06 May 2021 (2021-05-06) entire document | 1-31 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 January 2024** | **03 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

29

INTERNATIONAL SEARCH REPORT
Information on patent family members

International application No.

**PCT/CN2023/103519**

| Patent document cited in search report | | | Publication date (day/month/year) | Patent family member(s) | | | Publication date (day/month/year) |
|---|---|---|---|---|---|---|---|
| CN | 108282276 | A | 13 July 2018 | EP | 3549383 | A1 | 09 October 2019 |
| | | | | EP | 3549383 | A4 | 18 December 2019 |
| | | | | WO | 2018128284 | A1 | 12 July 2018 |
| | | | | US | 2023232465 | A1 | 20 July 2023 |
| | | | | US | 2021282194 | A1 | 09 September 2021 |
| | | | | US | 11617214 | B2 | 28 March 2023 |
| | | | | US | 2019342925 | A1 | 07 November 2019 |
| | | | | US | 11019666 | B2 | 25 May 2021 |
| | | | | EP | 3914028 | A1 | 24 November 2021 |
| | | | | KR | 20190095918 | A | 16 August 2019 |
| | | | | CN | 108282276 | B | 04 October 2022 |
| CN | 115997468 | A | 21 April 2023 | None | | | |
| CN | 112188383 | A | 05 January 2021 | WO | 2020248793 | A1 | 17 December 2020 |
| | | | | EP | 3958592 | A1 | 23 February 2022 |
| | | | | EP | 3958592 | A4 | 25 May 2022 |
| | | | | US | 2022104281 | A1 | 31 March 2022 |
| | | | | CN | 112188383 | B | 28 June 2022 |
| US | 2021136823 | A1 | 06 May 2021 | WO | 2018128218 | A1 | 12 July 2018 |
| | | | | US | 11178696 | B2 | 16 November 2021 |

Form PCT/ISA/210 (patent family annex) (July 2022)